# EUROPEAN PATENT APPLICATION

(11) **EP 2 903 247 A1**
(43) Date of publication of application: **05.08.2015**
(21) Application number: 13840668.1
(22) Date of filing: 26.09.2013
(51) Int. Cl.: H04M 3/00

(54) **COMMUNICATION ADAPTER, IDENTIFICATION CODE GENERATION METHOD, PROGRAM, AND NETWORK SYSTEM**

(30) Priority: 26.09.2012 JP 2012212349
(71) Applicant: Mitsubishi Electric Corporation, Tokyo 100-8310 (JP)
(72) Inventor: HIBARA Naoyuki, Tokyo 100-8310 (JP); KOIZUMI Yoshiaki, Tokyo 100-8310 (JP); ITO Yoshiaki, Tokyo 100-8310 (JP)
(74) Representative: Pfenning, Meinig & Partner GbR
(86) International application number: PCT/JP2013/076112
(87) International publication number: WO 2014/050991

(57) **Abstract**

Device identification code is generated by combining model code as model information and a communication identification number that is allocated to a communication adapter (step S106). Therefore, as long as an electrical device has a model code, it is not necessary to separately store in advance an identification code for identifying the electrical device. Consequently, it is possible to reduce the capacity of the storage device that is used for the electrical device, and as a result, it is possible to simplify the construction of the electrical device. Moreover, devices that form a network can be identified by using device identification code.

## Description

### Technical Field

The present disclosure relates to a communication adapter, identification code generation method, program, and network system, and more particularly to a communication adapter for connecting an electrical device to a network, an identification code generation method and program for generating identification code, and a network system that is equipped with electrical devices that are connected to a network by a communication adapter.

### Background Art

Electrical devices that are connected to the Internet or a home network are connected to a network by way of a communication adapter that functions as an interface. As a communication adapter that connects an electrical device to a network there are communication adapters that make communication possible between the electrical device and the network by installing a program that corresponds to the electrical device to be connected (for example, refer to Patent Literature 1 and Patent Literature 2). In this kind of communication adapter, the hardware specifications are common among devices, so that the adapter is inexpensive, and distribution is stable. Therefore, a network can be operated at low cost and operated flexibly.

A controller allocates an identification code to a communication adapter that connects a network and electrical device in order to be able to identify the communication adapter. An electrical device that is connected to the network is then identified by the identification code that is allocated to the communication adapter.

For this identification code above, there is a standard for automatically allocating an IP address as identification code to each device used in building a network, as represented in DHCP (Dynamic Host Configuration Protocol). By allocating an identification code to each device according to DHCP, there is no need to perform a setting for each device for building a network. As a result, building and managing a network become simple. However, when identification code is automatically allocated, there are cases in which accurately identifying a device on a network becomes difficult.

In order to solve this problem, various technology has been proposed in which two codes, an identification code for establishing communication on the network, and an identification code for identifying the device itself, are used in order to accurately identify a communication adapter and a device that is connected to a network by way of that communication adapter (refer to Patent Literature 3, for example).

### Citation List

### Patent Literature

Patent Literature 1: Unexamined Japanese Patent Application Kokai Publication No. 2004-229266.
Patent Literature 2: Unexamined Japanese Patent Application Kokai Publication No. 2006-127432.
Patent Literature 3: Unexamined Japanese Patent Application Kokai Publication No. 2008-172570.

### Summary of Invention

### Technical Problem

In the first technology disclosed in Patent Literature 3, a controller gives a communication adapter a first identification code for establishing communication, and a second identification code for identifying the controller. When performing communication, the controller acquires the second identification code, and information such as manufacturer information, model information, control-property information and the like by way of the communication adapter. Then the controller identifies the object of communication by comparing the acquired information with information that was stored beforehand. In this technology, the controller requires a storage means for storing the manufacturer information and the like. Therefore, there is a problem in that construction of the controller becomes complex.

In the second technology disclosed in Patent Literature 3, the electrical device itself stores an identification code for identifying the electrical device. In this technology, the electrical device itself requires a storage means for storing identification code. Therefore, there is a problem in that the construction of the electrical device becomes complex.

In consideration of the situation described above, the objective of the present disclosure is to identify each device of a network easily without making the construction of the devices complex.

### Solution to Problem

In order to accomplish the objective above, the communication adapter of the present disclosure is a communication adapter for connecting an electrical device to a network, comprising: acquisition means that acquires model information from the electrical device that indicates a model of the electrical device; and identification code generation means that generates device identification code for identifying the electrical device on the network by combining the model information with communication identification information that was allocated to the communication adapter.

### Advantageous Effects of Invention

According to the present disclosure, model information is acquired for each electrical device, and device identification code for identifying electrical devices on a network is generated based on the electrical device information and communication identification information for identifying a communication adapter. Therefore, it is not necessary for the electrical device to store device identification code beforehand. Consequently, identification of the electrical device is possible without the construction of the device being complex.

Moreover, as long as a device that executes identification of an electrical device on a network has the model information and communication identification information, it is possible to identify an electrical device on a network even without having other identification information. Therefore, construction of a controller that performs identification of an electrical device does not become complex.

### Brief Description of Drawings

FIG. 1 is a block diagram of a network system of an embodiment;
FIG. 2 is a block diagram of a controller and communication adapter;
FIG. 3 is a flowchart illustrating processing that is executed by a device identification code generator;
FIG. 4 is a drawing that schematically illustrates a device identification code;
FIG. 5 is a flowchart illustrating processing that is executed by a device information manager;
FIG. 6 is a drawing for explaining processing that is executed by a device information manager;
FIG. 7 is a block diagram illustrating a variation of a communication adapter;
FIG. 8 is a drawing that schematically illustrates a variation of a device identification code; and
FIG. 9 is a block diagram illustrating a variation of a communication adapter.

### Description of Embodiments

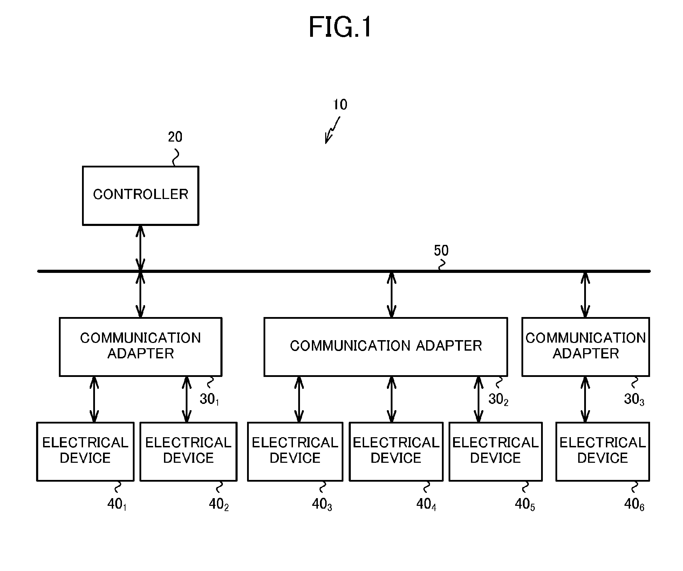

In the following, an embodiment of the present disclosure will be explained with reference to the drawings. FIG. 1 is a block diagram of a network system 10 of this embodiment. The network 10 has plural electrical devices 40 that are connected to a communication network 50 such as the Internet or local area network by way of communication adapters 30, and a controller 20 that performs control of these electrical devices 40.

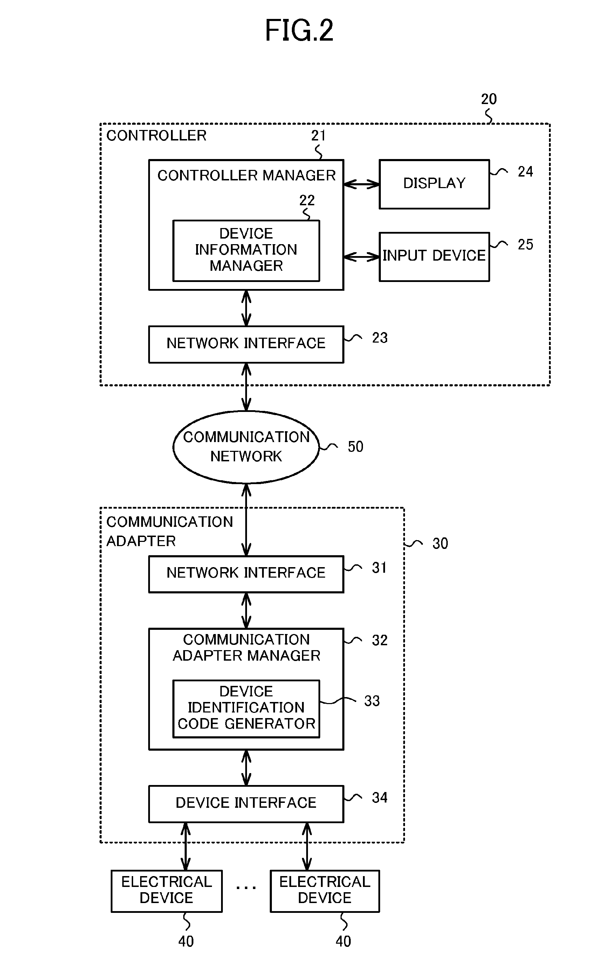

FIG. 2 is a block diagram of a controller 20 and a communication adapter 30. As illustrated in FIG. 2, the communication adapter 30 has a network interface 31, a communication adapter manager 32 and a device interface 34.

The network interface 31 connects the communication adapter manager 32 and communication network 50 so that communication is possible. This network interface 31 has a LAN (Local Area Network) interface.

The communication adapter manager 32 is a computer comprising a CPU, a main memory and an auxiliary memory. The communication adapter manager 32 executes a program that is stored in the auxiliary memory. The communication adapter manager 32 also generates device identification code for identifying an electrical device 40 that is connected to the communication network 50. Hereafter, for convenience of explanation, the function of generating device identification code by the CPU executing a program will be considered to be executed by a device identification code generator 33. Moreover, the communication adapter manager 32 outputs the information that was acquired by way of the network interface 31 to the electrical device 40 by way of the device interface 34.

A communication identification number for identifying the communication adapter 30 is allocated to the communication adapter manager 32. This communication identification number is a MAC address, IEEE EUI-64 address or the like. The controller 20 can uniquely identify a communication adapter 30 that is connected to the communication network 50 from the communication identification number. This communication identification number is stored in the auxiliary memory of the communication adapter manager 32.

The device interface 34 connects an electrical device 40 to a communication adapter 30 so as to be able to communicate. This device interface 34 has a serial interface, or a parallel interface.

A management number that was determined beforehand by a user is set in a communication adapter 30 that is constructed as described above. This management number is a number that is set in order for a user to identify each communication adapter 30. For example, numbers such as "01", "02" and "03" are respectively set for communication adapters 30₁, 30₂, and 30₃ as the management number.

This management number is typically set for each of the same product or each lot. The management number is stored in the auxiliary memory of the communication adapter manager 32 in the same ways as the communication identification number.

Returning to FIG. 1, an electrical device 40 is an electrical device that is represented by an air-conditioner, a lighting apparatus or the like. An electrical device 40 is connected to a device interface 34 of a communication adapter 30. As illustrated in FIG. 1, the number of electrical devices 40 connected to a communication adapter 30 is not limited to one, and there are also cases in which two or three or more electrical devices 40 are connected to a communication adapter 30.

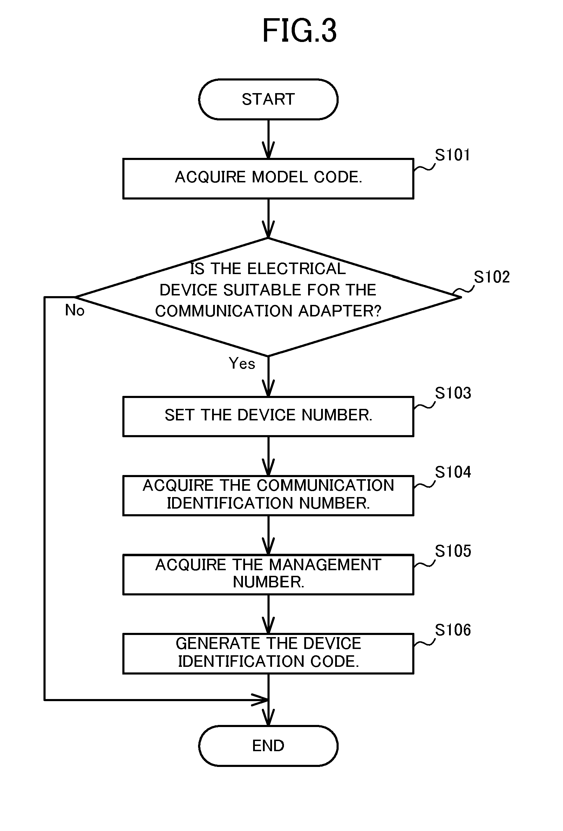

Next, the device identification code generation operation of a device identification code generator 33 will be explained. FIG. 3 is a flowchart illustrating the series of processing that a device identification code generator 33 executes. A device identification code generator 33 is connected to an electrical device 40 and performs communication with the electrical device 40 by way of a device interface 34. The device identification code generator 33 then acquires the model code of the electrical device 40 (step S101). The model code, for example, is used for identifying whether the electrical device 40 is an air-conditioner or a lighting apparatus.

Next, the device identification code generator 33 determines whether or not the electrical device 40 that is connected to the communication adapter 30 is suited to that communication adapter 30 (step S102). More specifically, the device identification code generator 33 identifies the model of the electrical device 40 from the acquired identification code. The device identification code generator 33 then determines whether or not the program that is installed in the communication adapter 30 corresponds to the identified model.

When the program above does not correspond to the model that was identified from the identification code, the device identification code generator 33 determines that the electrical device 40 is not suited to the communication adapter 30 (step S102: NO), and ends processing. In this case, the user needs to perform treatment such as installing a program in the communication adapter 30 that corresponds to the electrical device 40.

On the other hand, when the program above corresponds to the model that was identified from the identification code, the device identification code generator 33 determines that the electrical device 40 is suited to the communication adapter 30 (step S102: YES). The device identification code generator 33 then sets the device number for the electrical device 40 (step S103).

When plural electrical devices 40 are connected to a device interface 34, for example, the device number is a number that is set for identifying these electrical devices 40. For example, as illustrated in FIG. 1, two electrical devices 40₁, 40₂ are connected to the communication adapter 30₁. In this case, the device numbers "01" and "02" are respectively set in order for the electrical devices 40₁ and 40₂. Similarly, the device numbers "01", "02" and "03" are respectively set in order for the electrical devices 40₃, 40₄, and 40₅ that are connected to the communication adapter 30₂. Moreover, the device number "01" is set for the one electrical device 40₆ that is connected to the communication adapter 30₃.

The device numbers are set in the order of being recognized by the communication adapter manager 32. For example, when electrical devices are recognized in the order electrical device 40₁ and electrical device 40₂, the device number for electrical device 40₁ is set to "01", and the device number for electrical device 40₂ is set to "02", in that order.

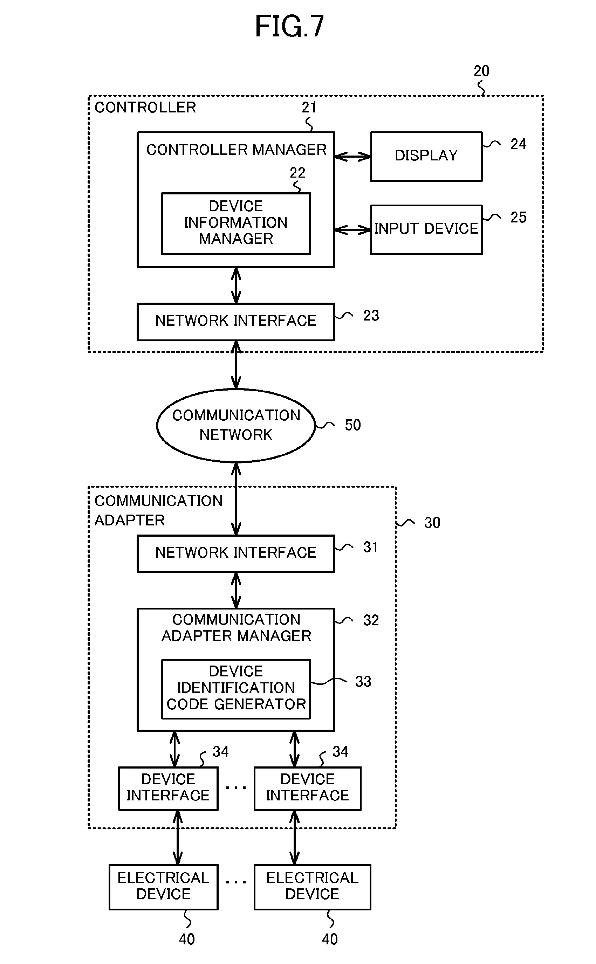

Meanwhile, the device numbers above do not absolutely need to be set based on the order that the electrical devices are recognized. For example, in the case in which a communication adapter 30 has a device interface 34 for each electrical device (see FIG. 7), the device numbers can be set based on the interface number that is given to the device interface 34.

After setting of the device numbers is completed, the device identification code generator 33 acquires communication identification numbers that are stored in the auxiliary memory of the device identification code generator 33 (step S104), and then acquires management numbers (step S105).

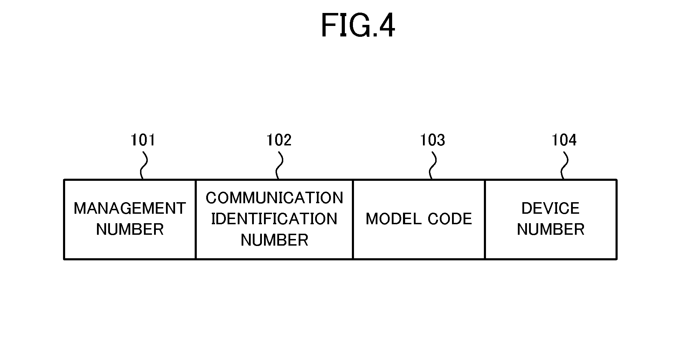

The device identification code generator 33 generates device identification code by combining the acquired model code, device number, communication identification number and management number (step S106). FIG. 4 illustrates an example of device identification code. For example, the device identification code that is illustrated in FIG. 4 is generated by combining the acquired model code 103, device number 104, management number 101, and communication identification number 102 in the order management number 101, communication identification number 102, model code 103 and device number 104.

By using the device identification code that was generated in this way, it is possible to uniquely identify electrical devices 40 that are connected to a communication network 50. After generating device identification code, the device identification code generator 33 saves the device identification code in the auxiliary memory of the communication adapter manager 32, and ends the device identification code generation operation.

Returning to FIG. 2, the controller 20 is a device that causes each of the electrical devices 40 that are connected to the communication network 50 to operate individually or linked together. As illustrated in FIG. 2, the controller 20 has a controller manager 21, a network interface 23, a display 24, and an input device 25.

The controller manager 21 is a computer that comprises a CPU, a main memory and an auxiliary memory. The controller manager 21 executes a program that is stored in the auxiliary memory. The controller manager 21 then acquires and manages device identification code from each of the communication adapters 30 that are connected to the communication network 50. Hereafter, for convenience of explanation, the function of acquiring and managing device identification code by the CPU executing the program will be taken to be executed by the device information manager 22. Moreover, when an instruction is inputted from a user by way of the input device 25, the controller manager 21 identifies the electrical device that is to be the object of control based on the device identification code, and performs control according to the instruction.

The network interface 23 connects the controller manager 21 and the communication network 50 so that communication is possible. This network interface 23 has a LAN (Local Area Network) interface.

The display 24 has a display unit such as a LCD (Liquid Crystal Display). The display 24 displays device identification codes, the state of electrical devices that are connected to the communication network 50, or the state of the communication adapters 30 and the like.

The input device 25 has a touch panel and/or input keys. The controller manager 21 is notified of instructions from a user by way of this input device 25.

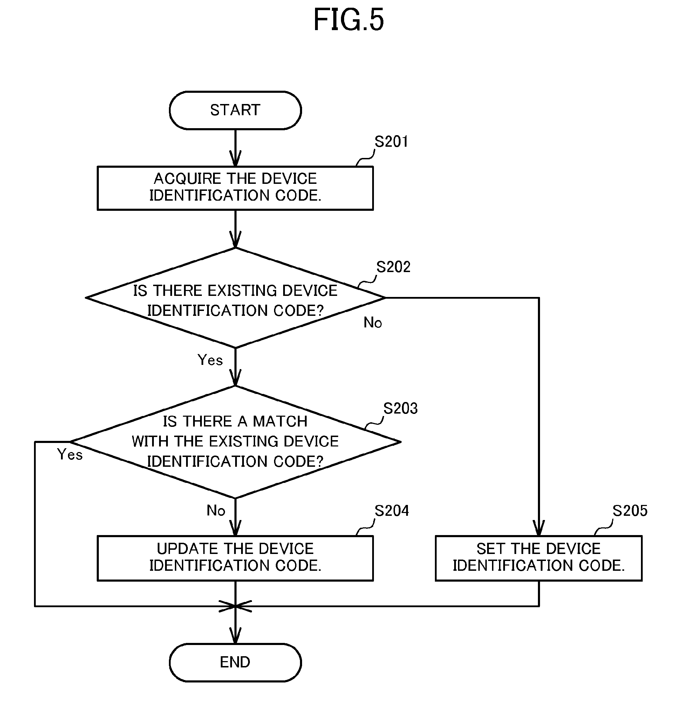

Next, the identification code setting operation by the device information manager 22 will be explained. FIG. 5 is a flowchart illustrating the series of processing that the device information manager 22 executes. As illustrated in FIG. 5, after an electrical device 40 is connected to a communication network 50, the device information manager 22 acquires device identification code that was generated by the device identification code generator 33 from a communication adapter 30 by way of the network interface 23 (step S201).

Next, when there is information for the device identification code (step

S202: YES), the device information manager 22 determines whether or not the content of the existing device identification code is the same as the content of the new device identification code that was acquired in step S201 (step S203).

As described above, the device identification code is generated by combining a communication identification number and model code. Therefore, the device identification code includes a portion that coincides with the communication identification number, and a portion that coincides with the model code. Consequently, when there is a change in an electrical device 40 that is connected to a communication adapter 30, the device identification code that is acquired in step S201 will be new code that is different from the existing code. On the other hand, when there is no change in an electrical device 40 that is connected to a communication adapter 30, the device identification code that is acquired in step S201 will be the same as the existing code.

The device information manager 22 compares the existing device identification code with the new device identification code, and when both match (step S203: YES), ends the identification code setting operation. However, when the existing device identification code and the new device identification code do not match (step S203: NO), the device information manager 22 updates the device identification code, in which the portion of the existing device identification code that corresponds to the communication identification number matches, to the new device identification code (step S204).

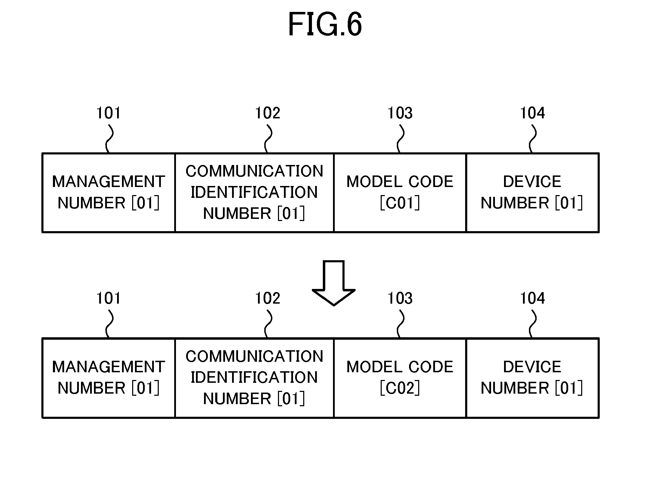

More specifically, as can be seen from FIG. 6, when an electrical device 40 having a model code 103 that is "C01" is connected to a communication adapter 30 having a communication identification number 102 that is "01", and the management number 101 and the device number 104 are both "01", the content of the device identification code is "0101C0101".

When the electrical device 40 that is connected to the communication adapter 30 is changed to an electrical device 40 having a model code 103 that is "C02", then, in step S201, device identification code having content "0101C0201" is acquired. In this case, the device information manager 22 updates the existing device identification code having content "0101C0101" to the new device identification code having content "0101C0201". As a result, the new device identification code is set as the identification information for identifying the electrical device 40. After the device identification code has been updated, the device information manager 22 ends the identification code setting operation.

Moreover, when there is no information for the device identification code (step S202: NO), the device information manager 22 sets and stores the new device identification code that was acquired in step S201 as the identification information for identifying the electrical device 40 in the following communication (step S205). As a result, the new device identification code is set as the identification information for identifying the electrical device 40. After the device identification code is stored, the device information manager 22 ends the identification code setting operation.

As was explained above, in this embodiment, the device identification code that is used by the controller 20 is generated by combining the model code as model information, the communication identification number that is allocated to the communication adapter 30, the management number, and the device number (step S106). Therefore, as long as the electrical device 40 has a model code, it is not necessary to separately store identification code in advance for identifying the electrical device. Consequently, it is possible to reduce the amount of a storage device that is used by the electrical device 40, and as a result, it is possible to simplify the construction of the electrical device 40.

In this embodiment, the device identification code includes a communication identification number that is allocated to the communication adapter 30, and a model code that is allocated to the electrical device 40. When there is a change in the electrical device 40 that is connected to the communication adapter 30, device identification code is newly generated by combining the communication identification number of the communication adapter 30 with the model code of the electrical device 40 that is connected to the communication adapter 30. Therefore, the controller 20 is able to identify the communication adapter 30 on the network, and identify the electrical device 40 based on just the device identification code even when the electrical device 40 that is connected to the communication adapter 30 is changed.

In this embodiment, the controller 20 is able to identify the electrical device 40 based on only the device identification code. Therefore, it is possible to identify a device in a short amount of time. Moreover, it is possible to simplify the construction of the controller 20.

In this embodiment, even when the combination of a communication adapter 30 and electrical device 40 changes due to trouble with the communication adapter 30 or the electrical device 40 that is connected to the communication adapter 30, device identification code is newly generated by combining the communication identification number of the communication adapter 30 and the model code of the electrical device 40 that is connected to the communication adapter 30. Therefore, the controller 20 is able to identify a communication adapter 30 on a network and identify an electrical device 40 without the operator having to take measures such as uploading data related to the device identification code.

In this embodiment, as illustrated in FIG. 1, when one electrical device 40₆ is connected to a communication adapter 30₃, even when the communication address that is allocated to that communication adapter 30₃ is changed, the model code, communication identification number, management number and device number of the device identification code do not change. Therefore, it is possible to uniquely identify the combination of the communication adapter 30₃ and electrical device 40₆ on the network. As a result, when exchanging devices, there is no need for the operator to take measures such as uploading data related to the device identification code.

In this embodiment, a network system 10 is created by connecting electrical devices 40 together by way of communication adapters 30. Therefore, even though the specifications of the electrical devices 40 of the network system 10 may be different, it is possible to easily create a network of electrical devices 40 by using a common communication adapter 30. Consequently, it becomes possible to flexibly operate the network system 10.

In this embodiment, when connecting an electrical device 40 to a communication adapter 30, device identification code for identifying that electrical device 40 is generated. Therefore, even when a network system 10 comprises plural electrical devices 40 of the same model, the controller 20 is able to accurately identify the electrical devices 40 on the network based on the device identification code.

In this embodiment, device identification code that is used by the controller 20 is generated by combining model code and the like with a device number. A device number is set for each electrical device 40 that is connected to a communication adapter 30. Therefore, as illustrated in FIG. 1, even when plural electrical devices 40₁ to 40₅ are connected to communication adapters 30₁ and 30₂, the controller 20 is able to identify each of the electrical devices 40₁ to 40₅ on the network.

In this embodiment, device identification code is generated by combining model code as model information with a communication identification number that is allocated to a communication adapter 30. Therefore, from the device identification code it is possible to determine the model of electrical devices 40 that are connected to the communication adapter 30. Consequently, when determining the model of an electrical device 40 there is no need to perform separate communication. As a result, the load on the network is reduced.

In this embodiment, device identification code is generated by combining model code and the like with a management number that is set in advance for a communication adapter 30. Therefore, from the device identification code it is possible to determine the production lot, production date of the communication adapter 30 that is correlated with the management number, and information about the models that are connected to that communication adapter 30. Therefore, when some kind of trouble occurs in a combination of that communication adapter 30 and an electrical device 40, it is possible for the manufacturer or the like to quickly identify the cause of the trouble by simply notifying the manufacturer or the like of the device identification code. As a result, the quality of service that is provided to a user that uses the network is improved, and thus the convenience to the user is improved.

An embodiment of the present disclosure was explained above; however, the present disclosure is not limited to the embodiment described above.

For example, in the embodiment above, as illustrated in FIG. 2, when an electrical device 40 is connected to a communication adapter 30, the electrical device 40 was connected to a communication adapter manager 32 by way of a common device interface 34. However, the disclosure is not limited to this, and as illustrated in FIG. 7, it is also possible to connect each electrical device 40 to a communication adapter manager 32 by way of separate device interfaces 34.

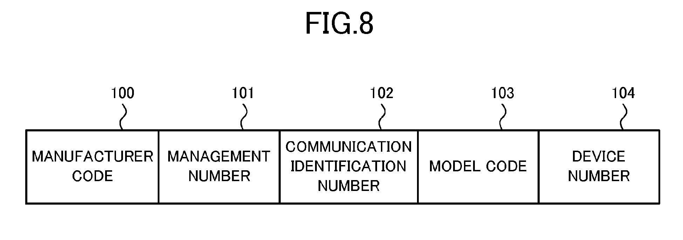

In the embodiment above, as illustrated in FIG. 4, device identification code was generated by combining a management number, communication identification number, model code, and device number. However, the disclosure is not limited to this, and as illustrated in FIG. 8, the device identification code can also be generated by combining a management number 101 and the like with a manufacturer code 100. In this case, even when the method of allocating a device identification code is different for each manufacturer, it is possible to set device identification codes for each electrical device that are not redundant.

In the embodiment above, the communication identification number is a MAC address, and IEEE EUI-64 address or the like. However, the communication identification number is not limited to this, and it is also possible for the communication identification number to be the network address that is used for communication on a network. This network address is set for each electrical device so that there is no redundancy on the network. Therefore, by using a device identification code that is generated using the communication identification number, it becomes possible to uniquely identify electrical devices 40 on a network.

In the embodiment above, the case was explained in which, as illustrated in FIG. 4, when generating the device identification code, a management number, a communication identification number, a model code and a device number were combined in order. However the device identification code is not limited to this, and it is also possible to convert (hash) the four kinds of identification information above using a specified algorithm. In this case as well, it is possible to generate device identification codes by which electrical devices 40 can be uniquely identified. Moreover, extraction of the management number, communication identification number, model code and device number from the device identification code becomes difficult. Therefore, it is possible to prevent leakage of that information, and thus security of the network can be improved.

The electrical devices 40 of the embodiment above are not limited to air-conditioners or lighting apparatuses, and could also be a solar power generation system, electric water heater, induction heating (IH) cooking device, and the like. With the network system of this embodiment it becomes possible to effectively control these electrical devices 40.

Moreover, it is also possible to connect a temperature sensor, luminance sensor, human detection sensor and the like that are located in a home as electrical devices 40 to a communication adapter 30. As a result, it becomes possible to control electrical devices such as air-conditioners based on the output of each sensor.

The functions of the controller manager 21 and communication adapter manager 32 of the embodiment above can also be achieved by special hardware, or by a normal computer system.

### (Variation)

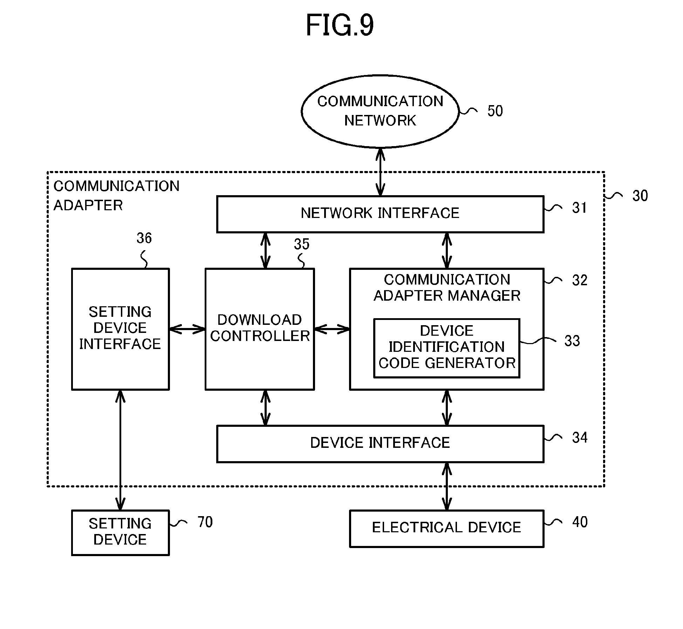

Next, a variation of a communication adapter 30 will be explained. As illustrated in FIG. 9, the communication adapter 30 of this variation is equipped with a download controller 35. For example, when the communication adapter manager 32 is built up with special hardware, the download controller 35 downloads a control program that is executed by the communication adapter manager 32 from a server or the like that is connected to the communication network 50 by way of a network interface 31. Then, the download controller 35 uploads that control program to the communication adapter manager 32. By executing that program, the communication adapter manager 32 functions as the device identification code generator 33.

Moreover, in the case where the control program is stored in an electrical device 40, the download controller 35 downloads the control program that is executed by the communication adapter manager 32 from the electrical device 40 by way of the device interface 34. Then, the download controller 35 uploads that control program to the communication adapter manager 32. By executing that program, the communication adapter manager 32 functions as the device identification code generator 33.

Furthermore, the download controller 35 can also download the control program to that download controller 35 from a setting device 70 that is connected by way of a setting device interface 36, and then upload that control program to the communication adapter manager 32. The setting device 70 can be a personal computer, for example.

As was explained above, in this variation, by uploading a control program to the communication adapter manager 32, the communication adapter manager 32 functions as the device identification code generator 33. Therefore, by changing the control program that is uploaded to the communication adapter manager 32 it is possible to change the method of generating device identification code. Consequentially, the network system can be flexibly operated. More specifically, by using the most suitable control program for an electrical device 40, it is possible to generate the most suitable device identification codes for each electrical device 40.

Moreover, by uploading a control program corresponding to the electrical device 40 to the communication adapter manager 32, it becomes possible to use the same communication adapter 30 for different electrical devices 40.

Furthermore, by connecting the setting device 70 that is the download source with the communication adapter 30, and downloading a program from that setting device 70, it is possible to download a control program without using the Internet.

Various embodiments and variations of the present disclosure are possible within the wide spirit and range of the disclosure. Moreover, the embodiments described above are for explanation of the present disclosure and do not limit the range of the disclosure. In other words, the range of the present disclosure is as presented in the Claims and not the embodiments. Various variations that are within the range of the Claims and within the range of significance of an equivalent disclosure are considered to be within the range of the present disclosure.

This specification claims priority over Japanese Patent Application No. 2012-212349, including the description, claims, drawings and abstract, as filed on September 26, 2012. Japanese Patent Application No. 2012-212349 is included in its entirety in this specification by reference.

### Industrial Applicability

The communication adapter of the present disclosure is suitable for connecting an electrical device to a network. The identification code generation method and program of the present disclosure are suitable for generating a device identification code that is used for identifying a specific electrical device on a network. The network system of the present disclosure is suitable for operating electrical devices.

### Reference Signs List

- 10: Network system
- 20: Controller
- 21: Controller manager
- 22: Device information manager
- 23: Network interface
- 24: Display
- 25: Input device
- 30: Communication adapter
- 31: Network interface
- 32: Communication adapter manager
- 33: Device identification code generator
- 34: Device interface
- 35: Download controller
- 36: Setting device interface
- 40: Electrical device
- 50: Communication network
- 70: Setting device.

## Claims

1. A communication adapter for connecting an electrical device to a network, comprising:
acquisition means that acquires model information from the electrical device that indicates a model of the electrical device; and
identification code generation means that generates device identification code for identifying the electrical device on the network by combining the model information with communication identification information that was allocated to the communication adapter.

2. The communication adapter according to Claim 1, wherein
the identification code generation means
sets a device number to be allocated to the electrical device, and
generates the device identification code by combining the model information, the communication identification information and the device number.

3. The communication adapter according to Claim 1, wherein
the identification code generation means
generates the device identification code by combining the model information, the communication identification information, and a communication adapter management number that was set beforehand for the communication adapter.

4. The communication adapter according to Claim 2, wherein
the identification code generation means
generates the device identification code by combining the model information, the communication identification information, the device number, and the communication adapter management number that was set beforehand for the communication adapter.

5. The communication adapter according to Claim 1, wherein
the identification code generation means
generates the device identification code by combining the model information, the communication identification information, and a manufacturer code that is allocated to the electrical device by the manufacturer of the electrical device.

6. The communication adapter according to any one of the Claims 1 to 5, wherein
the identification code generation means
generates the device identification code by executing a downloaded program.

7. An identification code generation method, including:
an acquisition step of acquiring model information for an electrical device from the electrical device that is connected to a network by way of a communication adapter; and
a generation step of generating device identification code for identifying the electrical device on the network by combining the model information with communication identification information that was allocated to the communication adapter.

8. The identification code generation method according to Claim 7, wherein in the generation step,
the device identification code is generated by combining the model information, the communication identification information, and a manufacturer code that is allocated to the electrical device by the manufacturer of the electrical device.

9. A program for causing a computer to execute:
an acquisition procedure of acquiring model information for an electrical device from the electrical device that is connected to a network by way of a communication adapter; and
a generation procedure of generating device identification code for identifying the electrical device on the network by combining the model information with communication identification information that was allocated to the communication adapter.

10. The program according to Claim 9, wherein
in the generation procedure,
the device identification code is generated by combining the model information, the communication identification information, and a manufacturer code that is allocated to the electrical device by the manufacturer of the electrical device.

11. A network system, comprising:
a communication adapter according to any one of the Claims 1 to 6;
the electrical device that is connected to a network by way of the communication adapter; and
a controller that identifies the electrical device based on identification code that is generated by the communication adapter, and controls the electrical device.
